# EUROPÄISCHE PATENTSCHRIFT

(11) **EP 0 642 716 B1**
(45) Veröffentlichungstag und Bekanntmachung des Hinweises auf die Patenterteilung: **31.05.2000**
(21) Anmeldenummer: 94911827.7
(22) Anmeldetag: 22.03.1994
(51) Int. Cl.: H04B 1/16, H04H 1/00

(54) **SCHALTUNGSANORDNUNG ZUR ABLEITUNG EINES VON DER ÄNDERUNGSRICHTUNG DER EMPFANGSFELDSTÄRKE ABHÄNGIGEN SIGNALS**
CIRCUIT FOR DERIVING A SIGNAL DEPENDENT ON THE DIRECTION OF CHANGE OF THE RECEPTION FIELD INTENSITY
CIRCUIT POUR LA DERIVATION D'UN SIGNAL DEPENDANT DE LA DIRECTION DU CHANGEMENT DE L'INTENSITE DU CHAMP DE RECEPTION

(30) Priorität: 24.03.1993 DE 4309518
(43) Veröffentlichungstag der Anmeldung: 15.03.1995
(73) Patentinhaber: Blaupunkt-Werke GmbH, 31132 Hildesheim (DE)
(72) Erfinder: HERRMANN, Matthias, D-31141 Hildesheim (DE); VOGT, Lothar, D-31249 Hohenhameln (DE); KAESSER, Juergen, D-31199 Diekholzen (DE)
(86) Internationale Anmeldenummer: DE9400317
(87) Internationale Veröffentlichungsnummer: WO9422226

(56) Entgegenhaltungen:
- EP-A- 0 507 096
- US-A- 4 868 885

## Beschreibung

Die Erfindung betrifft eine Schaltungsanordnung zur Ableitung eines von der Änderungsrichtung der Empfangsfeldstärke abhängigen Signals in einem Rundfunkempfänger, der von einem Mikrocomputer steuerbar ist.

Rundfunkempfänger werden in zunehmendem Maße von Mikrocomputern gesteuert, wobei auch eine Auswertung eines die Feldstärke darstellenden Signals durchgeführt wird. Ein solches Signal wird beispielsweise durch eine Amplitudendemodulation und eine anschließende Tiefpaßfilterung des FM-Zwischenfrequenzsignals abgeleitet. Ein solches Feldstärkesignal wird unter anderem nach einer weiteren Verarbeitung durch den Mikrocomputer zur Verringerung der Stereo-Kanaltrennung oder der Lautstärke im Falle von Störungen und zur Auswahl eines von mehreren Sendern mit gleichem Programm benutzt. Die Verarbeitung des Feldstärkesignals im Mikrocomputer, insbesondere die Erfassung der Richtung von Änderungen ist mit Rechenaufwand verbunden.

Aufgabe der vorliegenden Erfindung ist es, ein Signal in Abhängigkeit von der Änderungsrichtung der Empfangsfeldstärke mit möglichst geringer Rechenleistung abzuleiten.

Diese Aufgabe wird erfindungsgemäß dadurch gelöst, daß außerhalb des Mikrocomputers ein Komparator vorgesehen ist, dem ein die jeweilige Feldstärke darstellendes Signal und ein vom Mikrocomputer erzeugtes die Feldstärke zu einem früheren Zeitpunkt darstellendes Signal zuführbar sind, und daß ein Ausgangssignal des Komparators dem Mikrocomputer zuführbar ist.

Die Verringerung der für die Richtungsbestimmung der Änderung der Feldstärke erforderlichen Rechenleistung ermöglicht, die freiwerdende Kapazität des Mikrocomputers in größerem Umfang für andere Funktionen zu nutzen.

Eine Weiterbildung der erfindungsgemäßen Schaltungsanordnung besteht darin, daß das die Feldstärke zu einem früheren Zeitpunkt darstellende Signal und das Ausgangssignal des Komparators über eine serielle periphäre Schnittstelle (SPI) zwischen dem Komparator und dem Mikrocomputer übertragen werden. Insbesondere bei Rundfunkempfängern mit einem hohen Integrationsgrad ist eine derartige Schnittstelle zur Kommunikation des Mikrocomputers mit dem Rundfunkempfänger vorteilhaft.

Der Vorteil der erfindungsgemäßen Schaltungsanordnung, nämlich die Ersparnis von Rechenleistung, wird insbesondere bei einer vorteilhaften Ausführungsform der Erfindung deutlich, bei welcher die die Feldstärke darstellenden Signale mit einer Auflösung von 16 Binärstellen vorliegen. Dabei wird eine Rechenoperation zweier 16-Bit-Worte erspart, die ohnehin nur zur Gewinnung einer 1-Bit-Information dient.

Eine besonders vorteilhafte Verwendung der erfindungsgemäßen Schaltungsanordnung besteht in der Prüfung der Feldstärke von alternativen Sendern, auf die der Rundfunkempfänger probehalber umgeschaltet wird.

Bei dem probeweisen Empfang von alternativen Frequenzen steht nämlich nur eine äußerst geringe Zeit von beispielsweise kleiner als 100 ms zur Verfügung, damit dieser probeweise Empfang möglichst keine hörbaren Störungen zur Folge hat. In dieser Zeit sind noch verschiedene für eine Prüfung nicht nutzbare Zeitabschnitte enthalten, wie beispielsweise die Dauer von Einschwingvorgängen im Empfangsteil 4, so daß zum Erkennen, ob der alternative Sender mit einer höheren Feldstärke einfällt, nur sehr kurze Zeit benötigt wird. Die erfindungsgemäße Schaltungsanordnung ist dabei in der Lage, ein der Richtungsänderung entsprechendes Signal sehr schnell zu erzeugen.

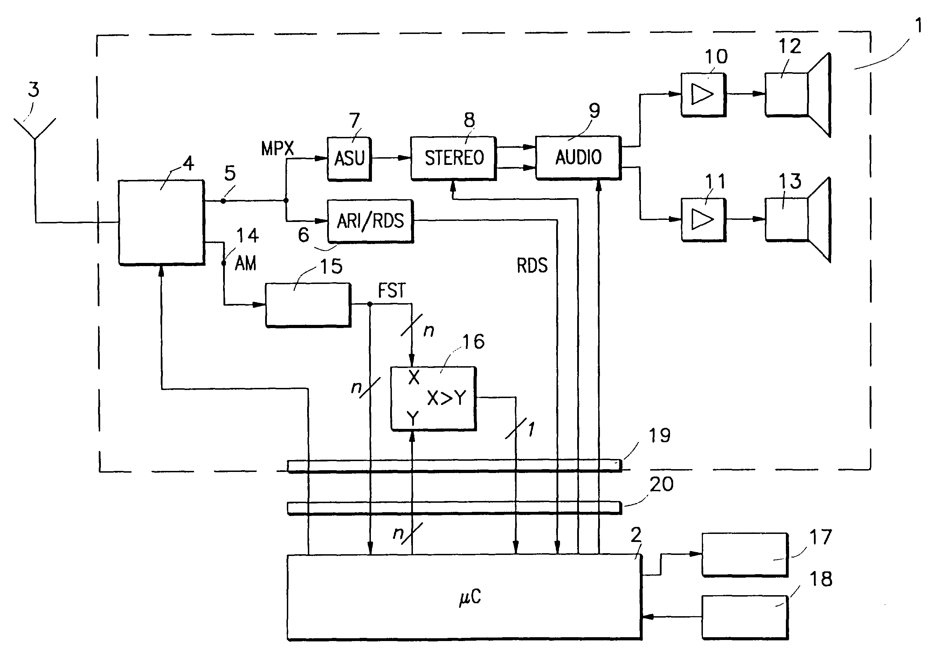

Ein Ausführungsbeispiel der Erfindung ist in der Zeichnung dargestellt und in der nachfolgenden Beschreibung näher erläutert.

Die Zeichnung zeigt wesentliche Teile eines Rundfunkempfängers 1, insbesondere solche Teile, die zur Erläuterung der Funktion der erfindungsgemäßen Schaltungsanordnung innerhalb des Rundfunkempfängers erforderlich sind. Ferner zeigt die Zeichnung einen Mikrocomputer 2, der den Rundfunkempfänger 1 steuert. Einzelne Schaltungsblöcke innerhalb des Rundfunkempfängers 1 stellen an sich bekannte Funktionsgruppen dar. Es ist im Rahmen der Erfindung jedoch nicht erforderlich, diese Funktionsgruppen auch als diskrete Baugruppen zu realisieren. Bei sehr hohem Integrationsgrad ist es ferner möglich, die gesamte digitale Signalverarbeitung des Empfängers in einem integrierten Schaltkreis zu realisieren, wobei Signalverarbeitungsschritte, wie beispielsweise Filterungen oder nichtlineare Wichtungen, durch Rechenoperationen durchgeführt werden. Innerhalb eines integrierten Schaltkreises können zur Realisierung eines Empfängers mit der erfindungsgemäßen Schaltungsanordnung auch digitale Signalprozessoren und andere digitale Schaltungen, wie beispielsweise Schieberegister, Flip-Flops usw., gemeinsam angeordnet sein.

Das über eine Antenne 3 empfangene Signal wird in einem Empfangsteil (Tuner) 4 in an sich bekannter Weise verstärkt, selektiert und demoduliert. Einem Ausgang 5 des Empfangsteils 4 ist ein demoduliertes Multiplexsignal MPX entnehmbar, das einem Verkehrsfunk/RDS-Decoder 6 und einer Schaltung 7 zur automatischen Störunterdrückung zugeführt wird. Daran schließen sich ein Stereo-Decoder 8 und ein Audioprozessor 9 an. Die entstehenden Audiosignale werden in an sich bekannter Weise mit Hilfe zweier Endstufen 10, 11 und zweier Lautsprecher 12, 13 wiedergegeben. Von dem Verkehrsfunk/RDS-Decoder 6 erzeugte Radiodatensignale RDS werden dem Mikrocomputer 2 zugeführt.

Das Empfangsteil 4 weist einen weiteren Ausgang 14 auf, an dem ein Signal AM ansteht, das durch Amplitudendemodulation des FM-Zwischenfrequenzsignals entstanden ist. Dieses wird einem Tiefpaßfilter 15 zugeleitet, an dessen Ausgang ein n Bit breites Feldstärkesignal ansteht. Dieses wird dem Mikrocomputer 2 und einem Eingang X eines Komparators 16 zugeleitet. Ein anderer Eingang Y des Komparators erhält ein ebenfalls n Bit breites Signal vom Mikrocomputer, das die Feldstärke zu einem vorangegangenen Zeitpunkt darstellt. Ein Ausgang des Komparators 16 gibt ein 1 Bit breites Signal in Abhängigkeit davon ab, ob X > Y ist. Dieses wird dem Mikrocomputer 2 zugeführt.

Der Mikrocomputer 2 dient bei dem dargestellten Rundfunkempfänger zur Steuerung verschiedener Vorgänge, insbesondere zur Einstellung der empfangenen Sender über eine im Empfangsteil 4 vorhandene, jedoch nicht dargestellte PLL-Schaltung und zur Steuerung des Stereo-Decoders 8 und des Audioprozessors 9, wobei in Abhängigkeit vom Feldstärkesignal FST eine Absenkung der Lautstärke und eine Stereo/Mono-Umschaltung vorgenommen wird. Der Mikrocomputer 2 ist ferner mit einer Anzeigevorrichtung 17 und einem Bedienteil 18 verbunden.

Wird dem Mikrocomputer 2 durch ein kleines Feldstärkesignal FST angezeigt, daß der zur Zeit empfangene Sender schwächer einfällt, wird vom Mikrocomputer 33 probeweise ein anderer Sender (alternativer Sender) eingestellt, wobei der Mikrocomputer durch das Radio-Daten-Signal RDS erkennt, ob der alternative Sender das gleiche Programm sendet. Dieses Verfahren ist an sich bekannt und braucht zur Erläuterung der erfindungsgemäßen Schaltungsanordnung nicht näher erläutert zu werden. Wird der alternative Sender mit einer geringeren Feldstärke als der zuvor empfangene Sender empfangen, wird sofort wieder auf den zuvor empfangenen Sender umgeschaltet. Ist jedoch die Feldstärke größer, so wird der Empfang des alternativen Senders fortgesetzt.

Dieser Vorgang läuft bei der erfindungsgemäßen Schaltungsanordnung etwa wie folgt ab: Während des Empfangs eines Senders wird laufend das Feldstärkesignal FST vom Mikrocomputer 2 geprüft. Ist es kleiner als ein vorgegebener Wert, veranlaßt der Mikrocomputer das Empfangsteil 4 eine andere Frequenz zu empfangen. Während des Empfangs dieser Frequenz bzw. dieses Senders wird vom Mikrocomputer der letzte Wert des Feldstärkesignals FST vor dem Umschalten dem Eingang Y des Komparators 16 zugeführt. Der Komparator 16 teilt dann dem Mikrocomputer 2 mit, ob die Empfangsfeldstärke des alternativen Senders größer oder kleiner ist. Außerdem erhält der Mikrocomputer 2 über den Verkehrsfunk/RDS-Decoder 6 die Information, ob der alternative Sender das gleiche Programm ausstrahlt. Durch Auswertung dieser Informationen wird dann vom Mikrocomputer 2 entschieden, ob der alternative Sender oder der zuvor empfangene Sender letztlich empfangen wird.

Die Datenübertragung zwischen dem Rundfunkempfänger 1 und dem Mikrocomputer 2 kann in vorteilhafter Weise durch serielle periphäre Schnittstellen (SPI) 19, 20 erfolgen, die in der Zeichnung lediglich angedeutet sind. Die Übertragung zwischen den Schnittstellen erfolgt mit Hilfe eines seriellen Bussystems. Der Übersichtlichkeit halber sind diese Einzelheiten jedoch nicht dargestellt. Geeignete Schnittstellen sind auf dem Markt erhältlich, beispielsweise unter der Typenbezeichnung MC68HC11E9 der Firma Motorola.

## Patentansprüche

1. Schaltungsanordnung zur Ableitung eines von der Änderungsrichtung der Empfangsfeldstärke abhängigen Signals in einem Rundfunkempfänger, der von einem Mikrocomputer steuerbar ist, dadurch gekennzeichnet, daß außerhalb des Mikrocomputers (2) ein Komparator (16) vorgesehen ist, dem ein die jeweilige Feldstärke darstellendes Signal und ein vom Mikrocomputer(2) erzeugtes die Feldstärke zu einem früheren Zeitpunkt darstellendes Signal zuführbar sind, und daß ein Ausgangssignal des Komparators (16) dem Mikrocomputer (2) zuführbar ist.

2. Schaltungsanordnung nach Anspruch 1, dadurch gekennzeichnet, daß das die Feldstärke zu einem früheren Zeitpunkt darstellende Signal und das Ausgangssignal des Komparators (16) über eine serielle periphäre Schnittstelle (SPI) (19, 20) zwischen dem Komparator (16) und dem Mikrocomputer (2) übertragen werden.

3. Schaltungsanordnung nach einem der vorhergehenden Ansprüche, dadurch gekennzeichnet, daß die die Feldstärke darstellenden Signale mit einer Auflösung von 16 Binärstellen vorliegen.

4. Schaltungsanordnung nach einem der vorhergehenden Ansprüche, gekennzeichnet durch die Verwendung zur Prüfung der Feldstärke von alternativen Sendern, auf die der Rundfunkempfänger (1) probehalber umgeschaltet wird.

## Claims

1. Circuit arrangement for deriving a signal which is dependent on the direction in which the received field strength is changing, in a broadcast radio receiver which can be controlled by a microcomputer, characterized in that a comparator (16) is provided outside the microcomputer (2), to which comparator (16) a signal which represents the respective field strength and a signal which is produced by the microcomputer (2) and represents the field strength at an earlier point in time can be supplied, and in that an output signal from the comparator (16) can be supplied to the microcomputer (2).

2. Circuit arrangement according to Claim 1, characterized in that the signal which represents the field strength at an earlier point in time, and the output signal from the comparator (16), are transmitted between the comparator (16) and the microcomputer (2) via a serial peripheral interface (SPI) (19, 20).

3. Circuit arrangement according to one of the preceding claims, characterized in that the signals which represent the field strength have a resolution of 16 binary digits.

4. Circuit arrangement according to one of the preceding claims, characterized by use for testing the field strength of alternative transmitters, to which the broadcast radio receiver (1) is switched for checking purposes.

## Revendications

1. Circuit dans un récepteur radio donnant un signal dépendant de la direction de variation de l'intensité de champ, ce récepteur étant commandé par un micro-ordinateur, caractérisé en ce qu'
il comprend, en plus du micro-ordinateur (2), un comparateur (16) recevant un signal représentant l'intensité de champ, respective et un signal généré par le micro-ordinateur (2), ce signal représentant l'intensité de champ à un instant antérieur, et le signal de sortie du comparateur (16) est appliqué au micro-ordinateur (2).

2. Circuit selon la revendication 1,
caractérisé en ce que
le signal représentant l'intensité de champ à un instant antérieur et le signal de sortie du comparateur (16) sont transmis par une interface périphérique série (SPI) (19, 20) entre le comparateur (16) et le micro-ordinateur (2).

3. Circuit selon l'une quelconque des revendications précédentes,
caractérisé en ce que
les signaux représentant les intensités de champ se présentent avec une résolution de 16 positions binaires.

4. Circuit selon l'une quelconque des revendications précédentes,
caractérisé par
l'utilisation, pour le contrôle, de l'intensité de champ des émetteurs alternatifs sur lesquels le récepteur radio (1) peut être commuté à titre d'essai.
